(19) **Europäisches Patentamt / European Patent Office / Office européen des brevets**

(11) **EP 2 608 475 A2**

(12) **EUROPEAN PATENT APPLICATION**
published in accordance with Art. 153(4) EPC

(43) Date of publication:
**26.06.2013 Bulletin 2013/26**

(51) Int Cl.:
**H04L 27/26** (2006.01) **H04B 7/26** (2006.01)
**H04W 72/00** (2009.01)

(21) Application number: **11818419.1**

(22) Date of filing: **18.08.2011**

(86) International application number:
**PCT/KR2011/006089**

(87) International publication number:
**WO 2012/023819 (23.02.2012 Gazette 2012/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.08.2010 US 375028 P**

(71) Applicant: **LG Electronics Inc.**
**Yeongdeungpo-gu**
**Seoul 150-721 (KR)**

(72) Inventors:
• **PARK, Kyujin**
**Anyang-Si**
**Gyeonggi-Do 431-080 (KR)**

• **KIM, Dongcheol**
**Anyang-Si**
**Gyeonggi-Do 431-080 (KR)**
• **CHO, Hangyu**
**Anyang-Si**
**Gyeonggi-Do 431-080 (KR)**
• **LIM, Dongguk**
**Anyang-Si**
**Gyeonggi-Do 431-080 (KR)**

(74) Representative: **Frenkel, Matthias Alexander**
**Wuesthoff & Wuesthoff**
**Schweigerstraße 2**
**D-81541 München (DE)**

(54) **METHOD AND APPARATUS FOR TRANSMITTING UPLINK DATA IN A WIRELESS ACCESS SYSTEM**

(57) The present description relates to a method for a terminal to transmit uplink (UL) data in a wireless access system, comprising the following steps: receiving uplink resource allocation information for uplink data transmission from a base station via a downlink control channel, wherein the uplink resource allocation information includes resource block allocation information for each slot of a subframe and modulation and coding scheme (MCS) information; receiving, from the base station, sequence information allocated to each terminal so as to transmit uplink data through a code division multiplexing (CDM) scheme in cooperation with other terminals in a resource block pair region of the subframe; and transmitting uplink data to the base station through the resource block pair region in accordance with the received sequence information.

FIG. 6

**Description**

**BACKGROUND OF THE INVENTION**

Field of the Invention

The present invention relates to a wireless access system, and more particularly, to a method and apparatus for transmitting uplink data.

Related Art

A machine-to-machine (M2M) communication (machine type communication, MTC) is described in brief below.

Machine to machine (M2M) communication as it is means communication between electronic devices. That is, M2M communication means communication between things. In general, M2M communication means wired or wireless communication between electronic devices or communication between a device and a machine which are controlled by human beings, but M2M communication is used to specially denote wireless communication between an electronic device and an electronic device, that is, devices. Furthermore, M2M devices used in a cellular network have lower performance or capability than common terminals.

There are many terminals within a cell, and the terminals may be classified depending on the type, class, service type, etc of the terminal.

For example, according to an operation type of terminals, the terminals can be divided into a terminal for human type communication (HTC) and machine type communication (MTC). The MTC may include communication between M2M devices. Herein, the HTC implies a signal transmission/reception operation in which signal transmission is determined by human interventions, and the MTC implies an operation in which each device autonomously transmits a signal either periodically or in an event-driven manner without human interventions.

In addition, when machine to machine (M2M) communication (or machine type communication (MTC)) is taken into consideration, the total number of terminals will increase suddenly. M2M devices may have the following features depending on supported service.

1. A large number of terminals within a cell

2. A small amount of data

3. Low transmission frequency (may have periodicity)

4. A limited number of data characteristics

5. Not sensitive to time delay

6. Low mobility or fixed

In addition, the M2M communication can be used in various fields such as secure access and surveillance, tracing and recovery, public safety (emergency situation, disasters), payment (vending machines, ticketing machines, parking meters), healthcare, remote control, smart meters, etc.

As described above, there is a high possibility that M2M communication shows a traffic feature different from that of the conventional H2H communication according to an application scenario of the M2M communication. In particular, specific M2M application scenarios may require a communication structure in which MTC user equipments (UEs) generate a significantly small amount of data and periodically report the data to a base station. In addition, in case of the H2H communication, each of HTC UEs independently generates data in a random burst format according to a user's request. However, in case of an MTC UE, the same user or service provider may employ several equivalent MTC UEs having the same traffic generation period in one cell.

As such, in a case where a great number of MTC UEs employed by the same user or service provider generate a small amount of data having the same feature and transmit the data to a base station according to the same period, the conventional resource allocation method used for this is disadvantageous not only in terms of a control channel overhead for scheduling information transmission but also in a sense that a control overhead (e.g., MAC header) or the like in a MAC layer applied for the conventional data transmission can be significantly increased in comparison with an actual information bit size.

In addition, it may be inappropriate to apply the conventional channel coding scheme to perform small data transmission, and it may also be inappropriate to apply a size of a CRC attached to apply HARQ, a physical resource block size used as the conventional resource allocation unit, etc.

**SUMMARY OF THE INVENTION**

The present invention provides a method for effectively supporting a great number of machine type communication (MTC) user equipments (UEs) which generate a small data burst.

In particular, the present invention provides a method for effectively transmitting a small data burst in accordance with a structure of a long term evolution (LTE)/LTE-advanced (LTE-A) physical/logical resource block or an 802.16 physical/logical resource unit currently used as a basic unit of data scheduling, and a scheduling method thereof.

That is, the present invention provides a method in which scheduling is performed effectively by grouping MTC UEs which report small data to a base station according to the same data transmission period, and data is transmitted by effectively multiplexing within the existing PRB in such a manner that an amount of resource elements (REs) necessary in transmission is minimized by decreasing an overhead of a higher layer.

In accordance with an aspect of the present invention, a method for transmitting uplink (UL) data by a user equipment (UE) in a wireless access system is provided. The method includes receiving UL resource allocation information for UL data transmission from a base station through a downlink (DL) control channel. The UL resource allocation information includes resource block allocation information regarding a resource block allocated to each slot constituting a subframe and modulation and coding scheme (MCS) information. The method includes receiving, from the base station, sequence information regarding a sequence allocated for each UE so as to transmit UL data in a code division multiplexing (CDM) manner in cooperation with another UE in a resource block pair region of the subframe, and transmitting UL data to the base station by using the resource block pair region on the basis of the received sequence information.

Further, the sequence information may include at least one of a seed sequence value allocated to generate a sequence for each UE, a cyclic shift value, and hopping pattern information for the cyclic shift.

Further, the resource block pair region may be hopped in a frequency domain.

Further, in the transmitting of the UL data, a symbol modulated with the MCS information may be mapped to a sequence generated by using the sequence information and may be transmitted to the base station by using the resource block pair region.

Further, the sequence information may be transmitted through the DL control channel or through higher layer signaling.

Further, the UL resource allocation information may be transmitted UE-specifically, group-specifically, or semi-specifically.

Further, if the UL resource allocation information is transmitted group-specifically, the UL resource allocation information may further include a group identifier (ID).

Further, the method may further include receiving, from the base station, acknowledgement (ACK) or negative acknowledgement (NACK) for the UL data transmission.

Further, the ACK or the NACK may be transmitted through a physical hybrid-ARQ indicator channel (PHICH).

Further, the PHICH resource mapping may be defined by the equation:

$$n_{PHICH}^{group} = (I_{PRB\_RA}^{lowest\_index} + n_{offset} + n_{DMRS}) \bmod N_{PHICH}^{group} + I_{PHICH} N_{PHICH}^{group}$$

$$n_{PHICH}^{seq} = (\lfloor (I_{PRB\_RA}^{lowest\_index} + n_{offset}) / N_{PHICH}^{group} \rfloor + n_{DMRS}) \bmod 2N_{SF}^{PHICH}$$

,

where $n_{offset}$ is an offset value for modifying the PHICH resource mapping in a long term evolution (LTE)/LTE-advanced (LTE-A) system.

Further, in the transmitting of the UL data, the UL data may be repetitively transmitted to the base station by using the resource block pair region during a specific subframe.

Further, the method may further include, if the NACK is received from the base station, retransmitting the UL data by using the resource block pair region.

Further, the method may further include receiving a UL grant from the base station to retransmit the UL data.

Further, the UE may be a machine type communication (MTC) UE or a machine-to-machine (M2M) UE supporting M2M communication.

In accordance with another aspect of the present invention, a user equipment (UE) for transmitting uplink (UL) data in a wireless access system is provided. The UE includes a radio frequency (RF) unit for transmitting and receiving a radio signal with respect to an external element, and a controller coupled to the RF unit. The controller is configured for controlling the RF unit for receiving UL resource allocation information for UL data transmission from a base station through a downlink (DL) control channel. The UL resource allocation information includes resource block allocation information regarding a resource block allocated to each slot constituting a subframe and modulation and coding scheme (MCS) information. The controller is configured for controlling the RF unit for receiving, from the base station, sequence information regarding a sequence allocated for each UE so as to transmit UL data in a code division multiplexing (CDM) manner in cooperation with another UE in a resource block pair region of the subframe, and transmitting UL data to the base station by using the resource block pair region on the basis of the received sequence information.

Further, the sequence information may include at least one of a seed sequence value allocated to generate a sequence for each UE, a cyclic shift value, and hopping pattern information for the cyclic shift.

Further, the controller may be configured for controlling the RF unit such that a symbol modulated with the MCS information is mapped to a sequence generated by using the sequence information and is transmitted to the base station by using the resource block pair region.

Further, the sequence information may be transmitted through the DL control channel or through higher layer signaling.

Further, the UL resource allocation information may be transmitted UE-specifically, group-specifically, or semi-specifically.

Further, if the UL resource allocation information is transmitted group-specifically, the UL resource allocation information may further include a group identifier (ID).

Further, the controller may be configured for controlling the RF unit such that acknowledgement (ACK) or negative acknowledgement (NACK) for the UL data transmission is received from the base station.

Further, the ACK or the NACK may be transmitted through a physical hybrid-ARQ indicator channel (PHICH).

Further, the controller may be configured for controlling the RF unit such that the UL data is repetitively transmitted to the base station by using the resource block pair region during a specific subframe.

Further, the controller may be configured for controlling the RF unit such that, if the NACK is received from the base station, the UL data is retransmitted by using the resource block pair region.

Further, the controller may be configured for controlling the RF unit such that a UL grant is received from the base station to retransmit the UL data.

According to the present invention, to transmit small data, a plurality of machine type communication (MTC) user equipments (UEs) are multiplexed in a code division multiplexing (CDM) manner and transmit uplink data through the same region. Therefore, waste of unnecessary resources can be avoided, and a control overhead in a higher layer can be decreased.

## BRIEF DESCRIPTION OF THE DRAWINGS

FIG. 1 shows the concept of a wireless communication system according to an embodiment of the present invention.

FIG. 2 shows an exemplary structure of a radio frame used in a 3GPP LTE system as an example of a mobile communication system.

FIGs. 3 (a) and (b) show a downlink and uplink subframe structure of a 3GPP LTE system as an example of a mobile communication system.

FIG. 4 shows a downlink time-frequency resource grid structure used in the present invention.

FIG. 5 shows a PUCCH format 2/2a/2b. FIG. 5(a) shows a normal CP structure, and FIG. 5(b) shows an extended CP structure.

FIG. 6 is a flowchart showing a UL data transmission method of an MTC UE according to a first embodiment of the present invention.

FIG. 7 is a flowchart showing an HARQ ACK/NACK feedback method according to a second embodiment of the present invention.

FIG. 8 is a flowchart showing a UL data retransmission method of an MTC UE according to a third embodiment of the present invention.

FIG. 9 is a block diagram showing internal structures of an MS and a BS in a wireless access system according to an embodiment of the present invention.

## DESCRIPTION OF EXEMPLARY EMBODIMENTS

The following technique may be used for various wireless communication systems such as code division multiple access (CDMA), a frequency division multiple access (FDMA), time division multiple access (TDMA), orthogonal frequency division multiple access (OFDMA), single carrier-frequency division multiple access (SC-FDMA), and the like. The CDMA may be implemented as a radio technology such as universal terrestrial radio access (UTRA) or CDMA2000. The TDMA may be implemented as a radio technology such as a global system for mobile communications (GSM)/ general packet radio service (GPRS)/enhanced data rates for GSM evolution (EDGE). The OFDMA may be implemented by a radio technology such as institute of electrical and electronics engineers (IEEE) 802.11 (Wi-Fi), IEEE 802.16 (WiMAX), IEEE 802.20, E-UTRA (evolved UTRA), and the like. IEEE 802.16m, an evolution of IEEE 802.16e, provides backward compatibility with a system based on IEEE 802.16e.

The UTRA is part of a universal mobile telecommunications system (UMTS). 3GPP (3rd generation partnership project) LTE (long term evolution) is part of an evolved UMTS (E-UMTS) using the E-UTRA, which employs the OFDMA in downlink and the SC-FDMA in uplink. LTE-A (advanced) is an evolution of 3GPP LTE.

In order to clarify a description, LTE-A is chiefly described, but the technical spirit of the present invention is not limited thereto.

For some embodiments of the present invention, a well-known structure and device may be omitted for avoiding ambiguity of the concept of the present invention. Also, some embodiments of the present invention may be shown in the form of a block diagram around essential functions of each structure and device. In addition, the same component may be described using the same reference number in drawings in the all disclosures.

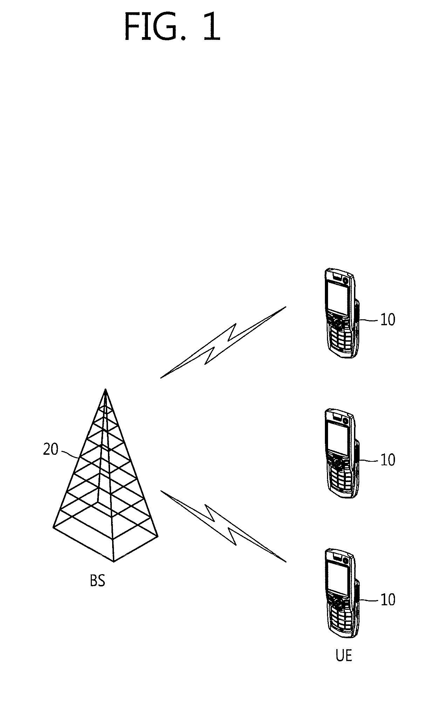

FIG. 1 shows the concept of a wireless communication system according to an embodiment of the present invention.

A wireless communication unit 100 includes at least one base station (BS) 20. Each BS 20 provides a communication service to a specific geographical region (generally referred to as a cell). The cell can be divided into a plurality of regions (referred to as sectors).

A user equipment (UE) 10 may be fixed or mobile, and may be referred to as another terminology, such as a mobile station (MS), a mobile terminal (MT), a user terminal (UT), a subscriber station (SS), a wireless device, a personal digital assistant (PDA), a wireless modem, a handheld device, etc. In addition, the UE 10 includes the concept of a machine-to-machine (M2M) or machine type communication (MTC) UE supporting M2M communication.

The BS 20 is generally a fixed station that communicates with the UE 10 and may be referred to as another terminology, such as an evolved node-B (eNB), a base transceiver system (BTS), an access point, etc.

The UE belongs to one cell in general. A cell to which the UE belongs is called a serving cell. A BS which provides a communication service to the serving cell is called a serving BS. Since the wireless communication system is a cellular system, there may be a different cell adjacent to the serving cell. The different cell adjacent to the serving cell is called a neighbor cell. A BS which provides a communication service to the adjacent cell is called a neighbor BS. The serving cell and the neighbor cell are determined relatively with respect to the UE.

This technique can be used in a downlink or an uplink. In general, the downlink implies communication from the BS 20 to the UE 10, and the uplink implies communication from the UE 10 to the BS 20. In the downlink, a transmitter may be a part of the BS 20, and a receiver may be a part of the UE 10. In the uplink, the transmitter may be a part of the UE 10, and the receiver may be a part of the BS 20.

The wireless communication system may be any one of a multiple-input multiple-output (MIMO) system, a multiple-input single-output (MISO) system, a single-input single-output (SISO) system, and a single-input multiple-output (SIMO) system.

The MIMO system uses a plurality of transmit (Tx) antennas and a plurality of receive (Rx) antennas. The MISO system uses a plurality of Tx antennas and one Rx antenna. The SISO system uses one Tx antenna and one Rx antenna. The SIMO system uses one Tx antenna and a plurality of Rx antennas.

The Tx antenna implies a physical or logical antenna used to transmit one signal or stream. The Rx antenna implies a physical or logical antenna used to receive one signal or stream.

In addition, the wireless communication system may be a system based on orthogonal frequency division multiplexing (OFDM)/orthogonal frequency division multiple access (OFDMA).

The OFDM uses a plurality of orthogonal subcarriers. Further, the OFDM uses an orthogonality between inverse fast Fourier transform (IFFT) and fast Fourier transform (FFT). The transmitter transmits data by performing IFFT on the data. The receiver restores original data by performing FFT on a received signal. The transmitter uses IFFT to combine the plurality of subcarriers, and the receiver uses FFT to split the plurality of subcarriers.

In addition, as a minimum possible data allocation unit, a slot is defined by using a time and a subchannel. In an uplink, the subchannel may consist of a plurality of tiles. The subchannel may consist of 6 tiles. In the uplink, one burst may consist of 3 OFDM symbols and one subchannel.

In partial usage of subchannels (PUSC) permutation, each tile may include 4 contiguous subcarriers on 3 OFDM symbols. Optionally, each tile may include 3 contiguous subcarriers on 3 OFDM symbols. A bin includes 9 contiguous subcarriers on an OFDM symbol. A band refers to a group of bins of 4 rows. An adaptive modulation and coding (AMC) subchannel consists of 6 contiguous bins in the same band.

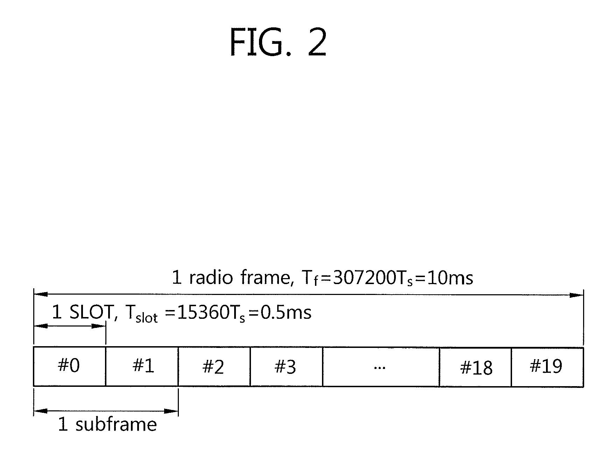

FIG. 2 shows an exemplary structure of a radio frame used in a 3GPP LTE system as an example of a mobile communication system.

Referring to FIG. 2, one radio frame has a length of 10 ms (327200 Ts), and consists of 10 subframes each of which has the same size. Each subframe has a length of 1 ms, and consists of two slots. Each slot has a length of 0.5 ms (15360 Ts). Herein, Ts denotes a sampling time, and is represented by $Ts=1/(15kHz \times 2048)=3.1552 \times 10\text{-}8$ (about 33ns). A slot includes a plurality of OFDM symbols or SC-FDMA symbols in a time domain, and includes a plurality of resource blocks in a frequency domain.

In an LTE system, one resource block (RB) includes 12 subcarriers $\times$ 7(6) OFDM symbols or single carrier-frequency division multiple access (SC-FDMA) symbols. A unit time of data transmission, i.e., a transmission time interval (TTI), can be defined in a unit of one or more subframes. The aforementioned radio frame structure is for exemplary purposes only, and thus the number of subframes included in the radio frame or the number of slots included in the subframe or the number of OFDM symbols or SC-FDMA symbols included in the slot may change variously.

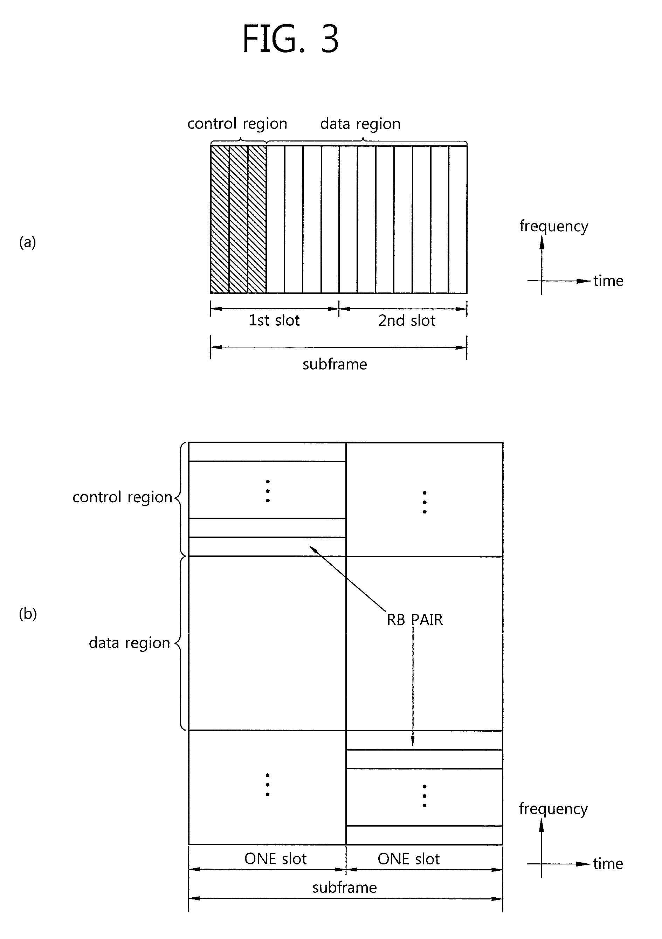

FIGs. 3 (a) and (b) show a downlink and uplink subframe structure of a 3GPP LTE system as an example of a mobile communication system.

Referring to FIG. 3(a), one downlink subframe includes two slots in a time domain. A maximum of three preceding OFDM symbols of a 1st slot in the downlink subframe correspond to a control region to which control channels are allocated. The remaining OFDM symbols correspond to a data region to which a physical downlink shared channel (PDSCH) is allocated.

Examples of downlink control channels used in the 3GPP LTE system include a physical control format indicator channel (PCFICH), a physical downlink control channel (PDCCH), a physical hybrid-ARQ indicator channel (PHICH), etc. The PCFICH transmitted in a 1st OFDM symbol of a subframe carries information regarding the number of OFDM symbols (i.e., a size of a control region) used for transmission of control channels in the subframe. Control information transmitted through the PDCCH is referred to as downlink control information (DCI). The DCI indicates uplink resource allocation information, downlink resource allocation information, an uplink transmit power control command for any UE groups, etc. The PHICH carries an acknowledgement (ACK)/not-acknowledgement (NACK) signal for an uplink hybrid automatic repeat request (HARQ). That is, the ACK/NACK signal for uplink data transmitted by a UE is transmitted on the PHICH.

Hereinafter, a PDCCH as a downlink physical channel will be described in brief.

Through the PDCCH, a BS can transmit a PDSCH's resource allocation and transmission format (also referred to as a downlink (DL) grant), PUSCH's resource allocation information (also referred to as an uplink (UL) grant), an aggregation of transmit power control commands for any UE or individual UEs in a group, an activation of a voice over Internet protocol (VoIP), etc. A plurality of PDCCHs can be transmitted in a control region, and the UE can monitor the plurality of PDCCHs. The PDCCH consists of an aggregation of one or several contiguous control channel elements (CCE).

The PDCCH consisting of the aggregation of one or several contiguous CCEs can be transmitted through the control region after being subjected to subblock interleaving. The CCE is a logical allocation unit used to provide the PDCCH with a coding rate depending on a state of a radio channel. The CCE corresponds to a plurality of resource element groups. According to a correlation of the number of CCEs and a coding rate provided by the CCEs, a PDCCH format and the number of bits of an available PDCCH are determined.

Control information transmitted through the PDCCH is referred to as downlink control information (DCI). Table 1 below shows the DCI according to a DCI format.

[Table 1]

| DCI Format | Description |
|---|---|
| DCI Format 0 | used for the scheduling of PUSCH |
| DCI Format 1 | used for the scheduling of one PDSCH codeword |
| DCI Format 1A | used for the compact scheduling of one PDSCH codeword and random access procedure initiated by a PDCCH order |
| DCI Format 1B | used for the compact scheduling of one PDSCH codeword with precoding information |
| DCI Format 1C | used for very compact scheduling of one PDSCH codeword |
| DCI Format 1D | used for the compact scheduling of one PDSCH codeword with precoding and power offset information |
| DCI Format 2 | used for scheduling PDSCH to UEs configured in closed-loop spatial multiplexing mode |
| DCI Format 2A | used for scheduling PDSCH to UEs configured in open-loop spatial multiplexing mode |
| DCI Format 3 | used for the transmission of TPC commands for PUCCH and PUSCH with 2-bit power adjustments |
| DCI Format 3A | used for the transmission of TPC commands for PUCCH and PUSCH with single bit power adjustments |

A DCI format 0 indicates uplink resource allocation information. DCI formats 1 to 2 indicate downlink resource allocation information. DCI formats 3 and 3A indicate an uplink transmit power control (TPC) command for any UE groups.

A method in which a BS maps a resource for PDCCH transmission in an LTE system will be described in brief.

In general, the BS can transmit scheduling allocation information and other control information through a PDCCH. A physical control channel can be transmitted using one aggregation or a plurality of contiguous control channel elements (CCE). One CCE includes 9 resource element groups (REGs).

$N_{REG}$ denotes the number of REGs not allocated to a physical control format indicator channel (PCFICH) or a physical hybrid automatic repeat request indicator channel (PHICH). A system can use CCEs indexed from 0 to $N_{CCE}$-1 (herein, $\boldsymbol{N_{CCE} = \lfloor N_{REG} \, 19 \rfloor}$ The PDCCH supports a multi-format as shown in Table 2 below. One PDCCH consisting of n contiguous CCEs starts from a CCE which performs i mod n=0 (herein, i denotes a CCE number). Multiple PDCCHs can be transmitted using one subframe.

[Table 2]

| PDCCH format | Number of CCEs | Number of resource-element groups | Number of PDCCH bits |
|---|---|---|---|
| 0 | 1 | 9 | 72 |
| 1 | 2 | 18 | 144 |
| 2 | 4 | 36 | 288 |
| 3 | 8 | 72 | 576 |

Referring to Table 2, the BS can determine a PDCCH format according to the number of regions on which control information or the like is transmitted. The UE can decrease an overhead by reading the control information or the like in a CCE unit. Likewise, a relay station can also read the control information or the like in a relay-control channel element (R-CCE) unit. In an LTE-A system, a resource element (RE) can be mapped in the R-CCE unit to transmit an R-PDCCH for any relay station.

Referring to FIG. 3(b), an uplink subframe can be divided into a control region and a data region in a frequency domain. The control region is allocated to a physical uplink control channel (PUCCH) for carrying uplink control information. The data region is allocated to a physical uplink shared channel (PUSCH) for carrying user data. To maintain a single-carrier property, one UE does not simultaneously transmit the PUCCH and the PUSCH. The PUCCH for one UE is allocated in an RB pair in one subframe. RBs belonging to the RB pair occupy different subcarriers in each of two slots.

The RB pair allocated to the PUCCH is frequency-hopped in a slot boundary.

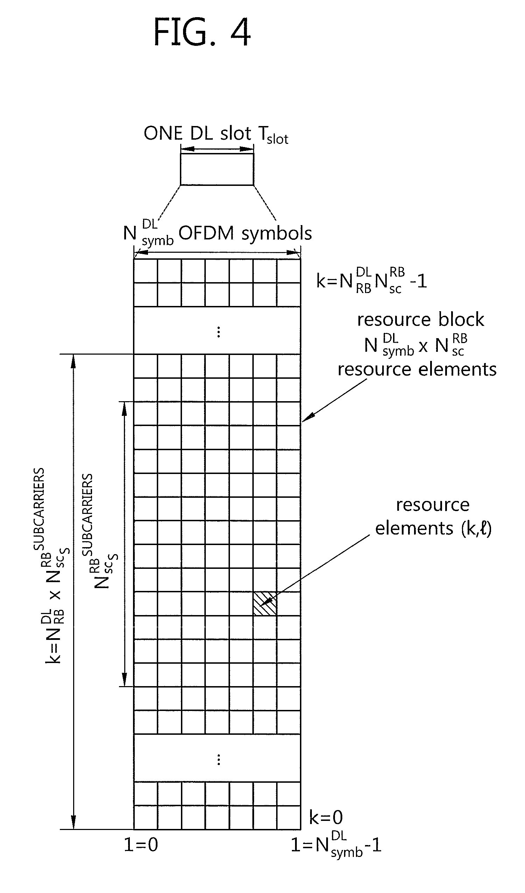

FIG. 4 shows a downlink time-frequency resource grid structure used in the present invention.

A downlink signal transmitted in each slot is used in a resource grid structure consisting of $N_{RB}^{DL} \times N_{SC}^{RB}$ subcarriers and $N_{symb}^{DL}$ OFDM symbols. Herein, $N_{RB}^{DL}$ denotes the number of resource blocks (RBs) in a downlink, $N_{SC}^{RB}$ denotes the number of subcarriers constituting one RB, and $N_{symb}^{DL}$ denotes the number of OFDM symbols in one downlink slot. A size of $N_{RB}^{DL}$ varies depending on a downlink transmission bandwidth configured in a cell, and must satisfy $N_{RB}^{min,DL} \leq N_{RB}^{DL} \leq N_{RB}^{max,DL}$. Herein, $N_{RB}^{min,DL}$ is the smallest downlink bandwidth supported by the wireless communication system, and $N_{RB}^{max,DL}$ is the largest downlink bandwidth supported by the wireless communication system. $N_{RB}^{min,DL}=6$ and $N_{RB}^{max,DL}=110$ are for exemplary purposes only, and thus the present invention is not limited thereto. The number of OFDM symbols included in one slot may differ depending on a cyclic prefix (CP) length and a subcarrier spacing. In case of multi-antenna transmission, one resource grid can be defined for one antenna port.

Each element in the resource grid for each antenna port is called a resource element (RE) and is uniquely identified by an index pair $(_k,l)$ in a slot.

Herein, k is an index in a frequency domain, and 1 is an index in a time domain. k has any one value among $0,...,N_{RB}^{DL}N_{SC}^{RB}-1$, and 1 has any one value among $0,...,N_{symb}^{DL}-1$.

The resource block (RB) of FIG. 4 is used to describe a mapping relation between a certain physical channel and resource elements. The RB can be expressed by a physical resource block (PRB) and a virtual resource block (VRB). The single PRB is defined by $N_{symb}^{DL}$ contiguous OFDM symbols in a time domain and $N_{SC}^{RB}$ contiguous subcarriers in a frequency domain. Herein, $N_{symb}^{DL}$ and $N_{SC}^{RB}$ may be pre-determined values. For example, $N_{symb}^{DL}$ and $N_{SC}^{RB}$ may be given by Table 3 below. Therefore, one PRB consists of $N_{symb}^{DL} \times N_{SC}^{RB}$ resource elements. Although one PRB may correspond to one slot in the time domain and may correspond to 180 kHz in the frequency domain, the present invention is not limited thereto.

[Table 3]

| Configuration | | $N_{sc}^{RB}$ | $N_{symb}^{DL}$ |
|---|---|---|---|
| Normal cyclic prefix $\Delta f$ = **15 kHz** | | 12 | 7 |
| Extended cyclic prefix | $\Delta f$ = **15 kHz** | | 6 |
| | $\Delta f$ = **7.5 kHz** | 24 | 3 |

The PRB has a value in the range of 0 to $N_{RB}^{DL}$-1 in a frequency domain. A relation between a PRB number $n_{PRB}$ in the frequency domain and a resource element (k,1) in one slot satisfies $n_{PRB} = \left\lfloor \dfrac{k}{N_{sc}^{RB}} \right\rfloor$.

The VRB has the same size as the PRB. The VRB can be defined by being classified into a localized VRB (LVRB) and a distributed VRB (DVRB). For each type of VRB, a pair of VRBs located in two slots in one subframe is allocated together with a single VRB number nVRB.

The VRB may have the same size as the PRB. Two types of VRB are defined. A first type is a localized VRB (LVRB), and a second type is a distributed VRB (DVRB). For each type of VRBs, a pair of VRBs has a single VRB index (hereinafter, also referred to as a VRB number) and is allocated across two slots of one subframe. In other words, any one index from 0 to $N_{RB}^{DL}$-1 is assigned to each of $N_{RB}^{DL}$ VRBs belonging to a first slot between two slots constituting one subframe, and likewise any one index from 0 to $N_{RB}^{DL}$-1 is assigned to each of $N_{RB}^{DL}$ VRBs belonging to a second slot between the two slots.

The aforementioned structure of the radio frame, the downlink subframe and the uplink subframe, the downlink time-frequency resource grid, or the like shown in FIG. 2 to FIG. 4 can also be applied between a BS and a relay station.

Hereinafter, a PUCCH will be described in brief.

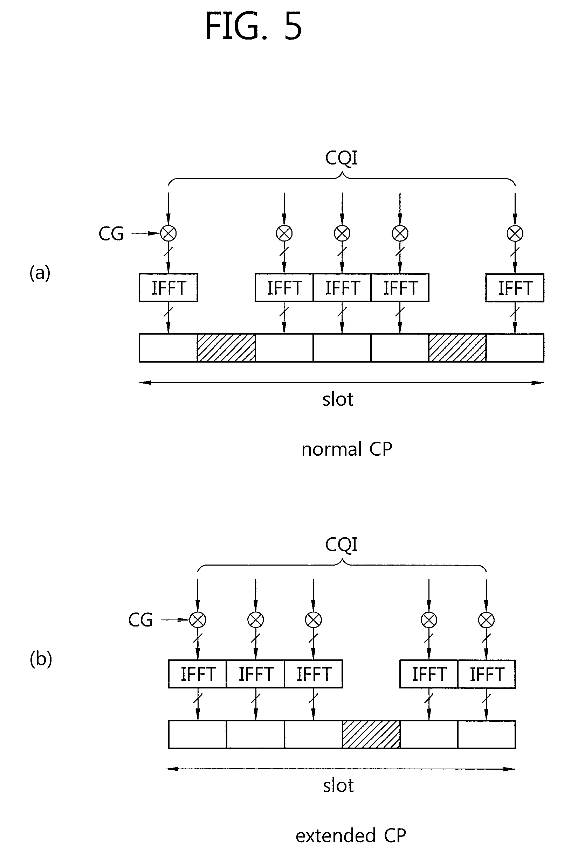

FIG. 5 shows a PUCCH format 2/2a/2b. FIG. 5(a) shows a normal CP structure, and FIG. 5(b) shows an extended CP structure.

In FIG. 5(a), a reference signal is transmitted in 2nd and 6th SC-FDMA symbols of a slot. In FIG. 5(b), a reference signal is transmitted in a 4th SC-FDMA symbol of a slot.

In the normal CP structure, one subframe includes 10 QPSK data symbols except for an SC-FDMA symbol for reference signal transmission. That is, each QPSK symbol can be spread by a cyclic shift at an SC-FDMA symbol level by using a 20-bit encoded CQI.

In addition, SC-FDMA symbol level cyclic shift hopping can be applied to randomize an inter-cell interference (ICI). A reference signal can be multiplexed in a code division multiplexing (CDM) manner by using a cyclic shift. For example, if the number of cyclic shift values to be used is 12, 12 UEs can be multiplexed within one PRB. That is, a plurality of UEs with the PUCCH format 1/1a/1b and the PUCCH format 2/2a/2b can be multiplexed respectively by using cyclic shift/orthogonal cover/resource block and cyclic shift/resource block.

A PRB used in PUCCH transmission in a slot $N_s$ can be determined by Equation 1 below.

[Equation 1]

$$n_{PRB} = \begin{cases} \left\lfloor \dfrac{m}{2} \right\rfloor & \text{if } (m + n_s \bmod 2) \bmod 2 = 0 \\ N_{RB}^{UL} - 1 - \left\lfloor \dfrac{m}{2} \right\rfloor & \text{if } (m + n_s \bmod 2) \bmod 2 = 1 \end{cases}$$

In Equation 1, $n_{PRB}$ denotes a PRB index. $N_{RB}^{UL}$ is an uplink bandwidth configuration expressed with a multiple of $N_{SC}^{RB}$. $N_{SC}^{RB}$ denotes a size of a resource block in a frequency domain represented with the number of subcarriers. When a PUCCH is mapped to a PRB, the PUCCH can be mapped orderly from an outer PRB to an inner PRB. In addition, the PUCCH can be mapped in the order of the PUCCH format 2/2a/2b, the ACK/NACK hybrid format, and the PUCCH format 1/1a/1b.

In the PUCCH format 1/1a/1b, m can be determined by Equation 2 below.

[Equation 2]

$$m = \begin{cases} N_{RB}^{(2)} & \text{if } n_{PUCCH}^{(1)} < c \cdot N_{cs}^{(1)} \Big/ \Delta_{shift}^{PUCCH} \\[2ex] \left\lfloor \dfrac{n_{PUCCH}^{(1)} - c \cdot N_{cs}^{(1)} / \Delta_{shift}^{PUCCH}}{c \cdot N_{sc}^{RB} / \Delta_{shift}^{PUCCH}} \right\rfloor + N_{RB}^{(2)} + \left\lceil \dfrac{N_{cs}^{(1)}}{8} \right\rceil & \text{otherwise} \end{cases}$$

$$c = \begin{cases} 3 & \text{normal cyclic prefix} \\ 2 & \text{extended cyclic prefix} \end{cases}$$

In Equation 2, $N_{RB}^{(2)}$ denotes a bandwidth represented with a resource block that can be used in each slot by using the PUCCH format 2/2a/2b.

nPUCCH(1) denotes an index of a resource used in PUCCH format 1/1a/1b transmission. $N_{CS}^{(1)}$ denotes the number of cyclic shift (CS) values used for the PUCCH format 1/1a/1b in a resource block used in a hybrid structure of the PUCCH format 1/1a/1b and format 2/2a/2b.

In the PUCCH format 2/2a/2b, m can be defined by Equation 3 below.

[Equation 3]

$$m = \left\lfloor n_{PUCCH}^{(2)} \Big/ N_{sc}^{RB} \right\rfloor$$

In the LTE-A system, an SC-FDMA transmission scheme is applied in an uplink. SC-FDMA is a transmission scheme in which IFFT is performed after DFT spreading is performed. The SC-FDMA is also called DFT-spread OFDM (DFT-s OFDM). A peak-to-average power ratio (PAPR) or a cubic metric (CM) can be decreased in the SC-FDMA. When using the SC-FDMA transmission scheme, a non-linear distortion duration of a power amplifier can be avoided and thus transmit power efficiency can be increased in a UE in which power consumption is limited. Accordingly, a user throughput can be increased.

Hereinafter, a method of transmitting UL data in a CDM manner to transmit a small data burst and a method of retransmitting UL data proposed in the present invention will be described in detail.

That is, the present invention provides a method in which scheduling is performed effectively by grouping MTC UEs which report small data to a BS according to the same data transmission period, and data is transmitted by effectively multiplexing within the existing PRB in such a manner that an amount of resource elements (REs) necessary in transmission is minimized by decreasing an overhead of a higher layer.

First embodiment

The first embodiment provides a method in which a plurality of MTC UEs transmits UL data in a CDM manner according to an embodiment of the present invention.

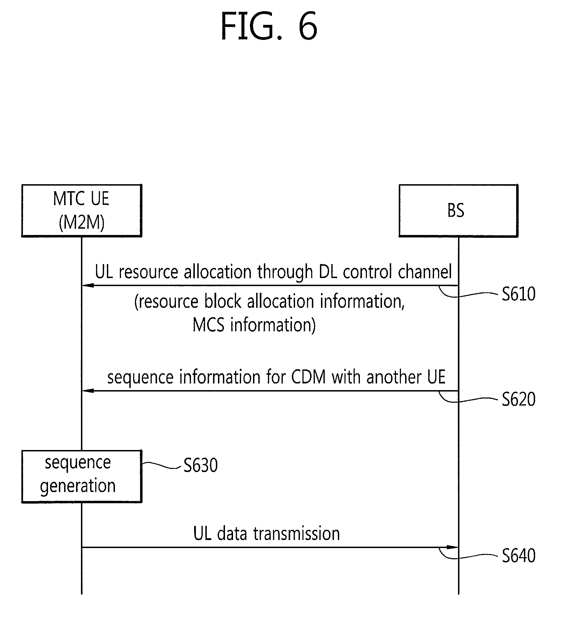

FIG. 6 is a flowchart showing a UL data transmission method of an MTC UE according to a first embodiment of the present invention.

Referring to FIG. 6, the MTC UE receives UL resource allocation information (i.e., a UL grant) for UL data transmission from a BS through a DL control channel (step S610). Herein, the UL resource allocation information includes at least resource block allocation information regarding a resource block allocated to each slot constituting the subframe and modulation and coding scheme (MCS) information. Herein, the resource block allocation information and the MCS information may be transmitted semi-statically through higher-layer signaling.

Thereafter, the MTC UE receives sequence information regarding a sequence allocated for each UE from the BS to transmit UL data in a CDM manner in a resource block pair region within a subframe (step S620). Herein, the sequence information includes at least one of a seed sequence value allocated to generate a sequence for each UE, a cyclic shift value, and hopping pattern information for the cyclic shift.

In addition, the sequence information can be transmitted through the DL control channel or higher layer signaling.

Thereafter, the MTC UE generates a sequence on the basis of the received sequence information (step S630), and transmits UL data to the BS through the resource block pair region (step S640). Herein, the MTC UE transmits the UL data to the BS through the resource block pair region by mapping a symbol modulated with the MCS information received from the BS to the generated sequence.

That is, in the first embodiment, if UL data is transmitted in a unit of one RB pair ($12 \times 14 = 168$ REs for normal CP including DM RS) as a basic unit of UL data channel transmission for small data transmission, in order to prevent many REs from being wasted for the usage of simple padding, the PUCCH transmission method of FIG. 5 is used to transmit UL data for a plurality of MTC UEs by performing CDM multiplexing through the same RB pair.

Hereinafter, the CDM-based UL data transmission method according to the first embodiment will be described when a BS allocates resources to an MTC UE in one of the following manners: 1) UE-specifically, 2) group-specifically, and 3) semi-statically.

1. UE-specific resource allocation method

In this method, similarly to a scheduling scheme for an HTC UE in an LTE/LTE-A system, resource allocation information per UE is transmitted through each UE-specific signaling.

Each MTC UE performs blind decoding on a DL control channel by using its C-RNTI (or STID) and thus receives scheduling information of the MTC UE from a BS. Thereafter, the MTC UE transmits UL data to the BS on the basis of the received scheduling information.

(1) Dynamic RB, MCS and sequence allocation

In this case, if a BS transmits a UL grant for an MTC UE through a DL control channel, sequence information (i.e., a seed sequence value for sequence generation and a cyclic shift value) is allocated together with RB allocation information and MCS information.

Herein, if hopping is additionally achieved for a cyclic shift value in a unit of symbol or slot, the BS can also transmit information regarding the hopping pattern to the MTC UE.

Alternatively, the cyclic shift hopping pattern information may be implicitly fixed.

(2) Dynamic RB and MCS allocation with semi-statically configured sequence

In this case, the BS semi-statically configures sequence information for CDM with another UE to an MTC UE which generates and transmits only small UL data through higher layer signaling.

That is, for each MTC UE, the BS configures at least one of a seed sequence value for generation of a sequence, a cyclic shift value, and information on a hopping pattern for the cyclic shift through higher layer signaling, and dynamically allocates RB allocation information, MCS information, etc., through a UL grant of a DL control channel.

In this case, the MTC UE uses an RB allocated through a UL grant to transmit UL data by applying (or mapping) the generated sequence to an MCS-modulated symbol allocated through the UL grant in a frequency axis.

(3) Dynamic RB allocation with semi-statically configured MCS and sequence

In case of any MTC UE, the UE may have a fixed position and thus may have no mobility.

In this case, a channel feature of the MTC UE is not changed dynamically, and thus it may be unnecessary to dynamically change an MCS.

In this case, a BS can allow the MTC UE to semi-statically configure MCS information through higher layer signaling together with information for the sequence generation and to report only RB allocation information through a UL grant of a DL control channel.

For another example, the BS can semi-statically configure the MCS information through higher layer signaling, and can dynamically report information regarding sequence generation, that is, sequence information, to the MTC UE through a UL grant of a DL control channel together with RB allocation information.

(4) Semi-statically configured RB allocation, MCS and sequence

In case of MTC UEs, a motion/traffic feature or the like may be almost fixed.

In this case, if the MTC UE receives RB allocation, MCS information, and sequence information from the BS in an initial network entry process, the MTC UE can perform semi-static configuration only through higher layer signaling.

For another example, if the MTC UE recognizes initial RB allocation through a UL grant from the BS, RB allocation can also be semi-statically configured through higher layer signaling similarly to MCS information and sequence information.

Although the aforementioned methods (1) to (4) are based on the structure of the PUCCH format 2 by referring to FIG. 5, similarly to the PUCCH format 1 type, a multiplexing gain can be increased by applying a sequence in a unit of subcarrier in a frequency axis and by additionally applying an orthogonal sequence in a time axis.

In addition, in each case, a location of a DM RS symbol can also be modified. That is, although a DM RS is transmitted in $2^{nd}$ and $6^{th}$ symbols of one slot in the aforementioned normal CP case of FIG. 5, it is also possible to transmit the DM RS only in a $4^{th}$ symbol of one slot similarly to the PUSCH transmission structure.

As such, if multiplexing for UL data transmission is achieved on a plurality of MTC UEs in a CDM manner within a given RB pair, a CRC size may be regulated according to a data size and a block error rate, and channel coding may be skipped.

2. Group-specific resource allocation method

Unlike the conventional method of scheduling the HTC UE, resources can be allocated by using group resource allocation to MTC UEs having the same feature or to MTC UEs deployed by the same user or the same service provider.

In this case, a BS allocates the same group ID (i.e., group C-RNTI or group STID) to MTC UEs belonging to a specific group.

The MTC UEs perform blind decoding on a DL control channel transmitted from the BS on the basis of the allocated group ID.

Herein, the BS can allocate an orthogonal sequence for CDM for each UE in a specific group through UE-specific higher layer signaling or can allocate it through group-specific higher layer signaling.

In addition, the BS can dynamically allocate common RB allocation information and common MCS information to MTC UEs in a specific group through a common UL grant.

Alternatively, the BS can semi-statically transmit the MCS information to the MTC UE in the specific group through higher layer signaling, and can dynamically transmit only RB allocation information through a DL control channel.

That is, all patterns of configuration setting methods described in the method 1 above can operate on the basis of a group STID. In this case, MTC UEs belonging to the same group can be configured to use the same MCS or can be configured to use different MCSs according to a channel state.

Herein, the group STID may be identical to the group STID configured for MTC UEs belonging to the same user or the same service provider, or may be a resource-allocation specific group STID configured additionally only for group resource allocation.

3. Semi-static resource allocation method

If a BS performs group resource allocation on MTC UEs as described in the method 2 above, MTC UEs belonging to a corresponding group can be easily applied to a case of generating data having the same feature according to the same period.

In this case, the BS can semi-statically allocate RB allocation information as well as sequence allocation information and MCS information for the MTC UEs belonging to the corresponding group. That is, similarly to a case of configuring information on the PUCCH format 2 described in FIG. 5, the BS can semi-statically configure sequence allocation information, MCS information, RB allocation information, and a period thereof and can report the configuration result to each MTC UE through higher layer signaling. In this case, each MTC UE transmits UL data to the BS by applying a sequence to a symbol modulated with a corresponding MCS through an allocated RB according to a corresponding period.

<u>Second embodiment</u>

The second embodiment provides an HARQ ACK/NACK feedback method for a plurality of MTC devices which transmit UL data on the basis of CDM according to an embodiment of the present invention.

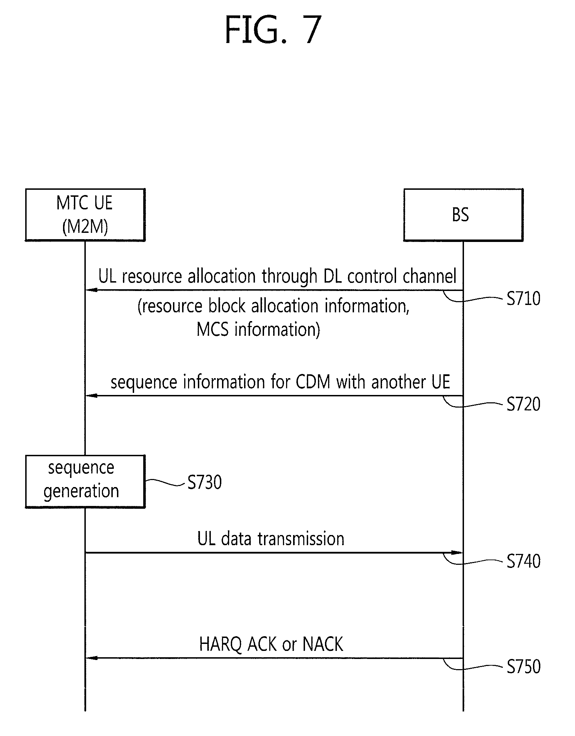

FIG. 7 is a flowchart showing an HARQ ACK/NACK feedback method according to a second embodiment of the present invention.

Since step S710 to step S740 are identical to step S610 to step S640 of FIG. 6, descriptions thereof are omitted, and only a different step, i.e., S750, will be described.

After step S740, the BS transmits an HARQ response on UL data received from the MTC UE, to the MTC UE through a PHICH (step S750). Herein, the HARQ response refers to HARQ ACK or NACK.

Hereinafter, a resource mapping method for a PHICH on which the HARQ response is transmitted will be described.

First, a PHICH in a 3GPP LTE/LTE-A system will be described in brief.

The PHICH is a channel for transmitting ACK/NACK information for a UL data channel. Several PHICH groups can be created in one subframe. One PHICH group may include several PHICHs.

Therefore, one PHICH group may include a PHICH for several UEs.

In the several PHICH groups, PHICH allocation for each UE is achieved by using a lowest PRB index of PUSCH resource allocation and a cyclic shift of a DMRS transmitted using a UL grant.

The PHICH resource is reported in an index pair such as $(N_{PHICH}^{group}, n_{PHICH}^{seq})$. In the index pair $(n_{PHICH}^{group}, n_{PHICH}^{seq})$, $n_{PHICH}^{group}$ denotes a PHICH group number, and $n_{PHICH}^{seq}$ denotes an orthogonal sequence index in a corresponding PHICH group.

An example of an orthogonal sequence used in the 3GPP LTE system is as shown in Table 4 below.

[Table 4]

| Sequence index | Orthogonal sequence | |
|---|---|---|
| $n_{PHICH}^{seq}$ | Normal cyclic prefix $N_{SF}^{PHICH}=4$ | Extended cyclic prefix $N_{S/F}^{PHICH}=2$ |
| 0 | [+1 +1 +1 +1] | [+1 +1] |
| 1 | [+1 -1 +1 -1] | [+1 -1] |
| 2 | [+1 +1 -1 -1] | [+j +j] |

(continued)

| Sequence index | Orthogonal sequence | |
|---|---|---|
| $n_{PHICH}^{seq}$ | Normal cyclic prefix $N_{SF}^{PHICH}=4$ | Extended cyclic prefix $N_{S/F}^{PHICH}=2$ |
| 3 | [+1 -1 -1 +1] | [+j -j] |
| 4 | [+j +j +j +j] | - |
| 5 | [+j -j +j -j] | - |
| 6 | [+j +j -j -j] | - |
| 7 | [+j -j -j +j] | - |

$n_{PHICH}^{group}$ and $n_{PHICH}^{seq}$ can be obtained by Equation 4 below.
[Equation 4]

$$n_{PHICH}^{group} = (I_{PRB-RA}^{lowest-index} + n_{DMRS}) \mod N_{PHICH}^{group}$$

$$n_{PHICH}^{seq} = (\lfloor I_{PRB-RA}^{lowest-index} / N_{PHICH}^{group} \rfloor + n_{DMRS}) \mod 2N_{SF}^{PHICH}$$

In Equation 4, $n_{DMRS}$ denotes a cyclic shift of a DMRS used in UL transmission related to a PHICH, $n_{SF}^{PHICH}$ denotes a spreading factor size used in the PHICH, $I_{PRB}$-RA$^{lowest-index}$ denotes a lowest PRB index of UL resource allocation, and $n_{PHICH}^{group}$ denotes the number of PHICH groups.
$N_{PHICH}^{group}$ can be obtained by Equation 5 below.
[Equation 5]

$$N_{PHICH}^{group} = \begin{cases} \lceil N_g (N_{RB}^{DL}/8) \rceil & \text{for normal cyclic prefix} \\ 2 \cdot \lceil N_g (N_{RB}^{DL}/8) \rceil & \text{for extended cyclic prefix} \end{cases}$$

In Equation 2 above, Ng ($N_g \in \{1/6, 1/2, 1, 2\}$) denotes information regarding an amount of a PHICH resource expressed in 2 bits and transmitted through a physical broadcast channel (PBCH), and $N_{RB}^{DL}$ denotes the number of resource blocks (RBs) in a downlink. In addition, a PHICH group can be configured in a different time domain within one subframe according to a PHICH duration.
1. The use of a PHICH mapping scheme in a 3GPP LTE/LTE-A system
As described above, even if UL data transmission is achieved using the same RB, if multiplexing is achieved between MTC UEs in a CDM manner, UE-specific PHICH resource mapping is possible since a cyclic shift value of a DM RS differs for each UE similarly to the MU-MIMO case. However, if PUSCH data transmission based on CDM is achieved for the MTC UE, according to a multiplexing capability, the cyclic shift value of the DM RS may have a value other than 8, that is, a value greater than or equal to 8 (e.g., 12 if a multiplexing capability is 12). This can be transmitted through a UL grant or higher layer signaling according to a method of transmitting the cyclic shift value, and can be applied to the PHICH mapping equation.
2. Modification of a PHICH mapping method in a 3GPP LTE/LTE-A system
An offset value can be defined to modify PHICH resource mapping in the 3GPP LTE/LTE-A system. That is, as a modification format of Equation 5, PHICH resource mapping can be achieved as shown in Equation 6 by introducing $n_{offset}$.

[Equation 6]

$$n_{PHICH}^{group} = (I_{PRB\_RA}^{lowest\_index} + n_{offset} + n_{DMRS}) \bmod N_{PHICH}^{group} + I_{PHICH} N_{PHICH}^{group}$$

$$n_{PHICH}^{seq} = (\lfloor (I_{PRB\_RA}^{lowest\_index} + n_{offset}) / N_{PHICH}^{group} \rfloor + n_{DMRS}) \bmod 2N_{SF}^{PHICH}$$

Herein, the value $n_{offset}$ can be transmitted to each MTC UE by being semi-statically configured through higher layer signaling. It is apparent that the value $n_{offset}$ can also be applied in another format in Equation 6 above. Alternatively, the value $n_{offset}$ can be mapped implicitly with a CDM sequence order in a corresponding RB.

3. New DCI format definition

A new DCI format can be defined for HARQ ACK/NACK feedback for an MTC UE. That is, without having to use the conventional PHICH, an HARQ ACK/NACK DCI format for DL HARQ ACK/NACK feedback can be newly defined and then can be transmitted to MTC UEs in a payload pattern by performing CRC-masking thereon.

That is, if UL PUSCH resources are allocated in a common UL grant pattern by grouping MTC UEs as described in the method 2 of the first embodiment, ACK/NACK information for each UE can be carried in transmission in a bitmap format through an HARQ ACK/NACK DCI format which is CRC-masked with a corresponding group ID.

Herein, a bitmap index at which ACK/NACK for each UE is transmitted in the HARQ ACK/NACK DCI format can be transmitted through the higher layer signaling or can be implicitly mapped according to a cyclic shift value of a DM RS.

For another example, a common ACK/NACK feedback method can be applied. That is, if a group-based common UL grant is transmitted by grouping the equivalent MTC UEs as described in the method 2 of the first embodiment, the BS can transmit to the MTC UEs the common ACK/NACK feedback for a corresponding group UE.

In this case, if a decoding error occurs in any one of the MTC UEs in the group, the BS transmits a NACK feedback to the MTC UEs in the group, and all of the MTC UEs in the group retransmit UL data to the BS.

In addition, the common ACK/NACK PHICH resource can be mapped by fixing a cyclic shift value of a DM RS.

Herein, as another example of the UL data retransmission process of the MTC UE, instead of transmitting ACK/NACK for the UL data of the MTC UE by the BS to the MTC UE, the MTC UE may repetitively transmit the UL data to the BS for n times.

That is, as described above, if the BS confirms retransmission of the MTC UE and then sends ACK/NACK to the MTC UE and if all MTC UEs retransmit the UL data, there is a resource overhead of configuring an ACK/NACK channel. In addition, the greater the number of MTC UEs to be multiplexed, the higher the probability that all users perform retransmission when NACK occurs for even only one user.

Therefore, instead of sending ACK/NACK for UL data by the BS to the MTC UE, the MTC UE can be configured to transmit UL data to the BS repetitively n times (where n is a natural number). That is, UEs multiplexed with CDM repeat transmission n times according to a rule k. Herein, the rule k is a rule in which UL data is transmitted through the same or hopped RBs across several subframes.

In this case, the specific rule k or the value n or the like can be transmitted to the MTC UE through higher layer signaling or a UL grant.

Third embodiment

The third embodiment provides a UL data retransmission method when an MTC UE receives HARQ NACK for UL data from a BS according to an embodiment of the present invention.

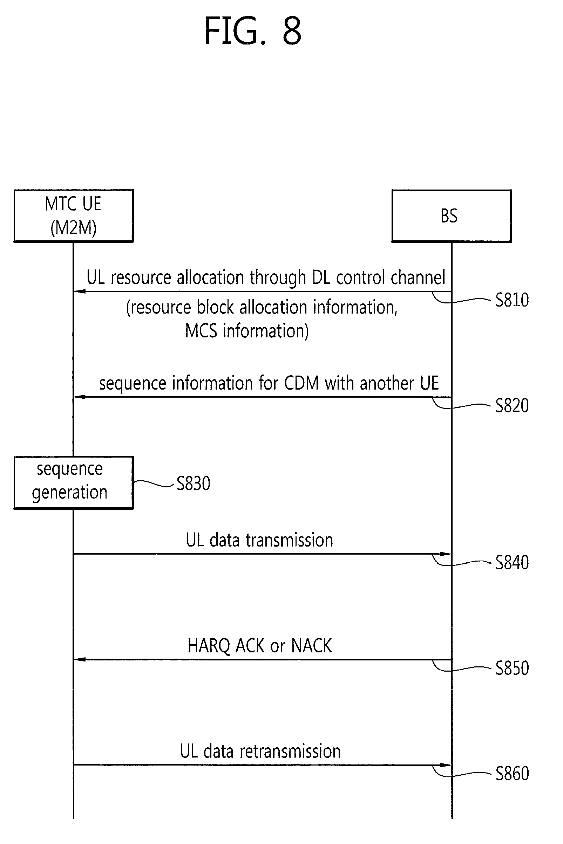

FIG. 8 is a flowchart showing a UL data retransmission method of an MTC UE according to a third embodiment of the present invention.

Since step S810 to step S850 are identical to step S710 to step S750 of FIG. 7, descriptions thereof are omitted, and only a different step, i.e., S860, will be described.

After step S850, the MTC UE performs a retransmission process for UL data (i.e., PUSCH) (step S860). Herein, the MTC UE can perform the retransmission process by using a synchronous non-adaptive scheme or a synchronous adaptive scheme.

First, in a process of performing retransmission on corresponding PUSCH transmission by using the synchronous non-adaptive scheme, initial UL data transmission may be achieved by multiplexing 12 MTC UEs through CDM in given one RB pair. In this case, if a decoding error occurs only for data of some of the MTC UE, e.g., two MTC UEs, and thus NACK is fed back, retransmission is performed in such a manner that only the two MTC UEs receive NACK and thereafter are multiplexed in a CDM manner by using the same RB pair.

In addition, in a process of performing retransmission on corresponding PUSCH transmission by using the synchronous adaptive scheme, a UL grant for retransmission is retransmitted so that an MTC UE which receives NACK can exclusively use a given resource, without having to perform CDM-multiplexing with another MTC UE when transmitting UL data. Thereafter, the MTC UE retransmits UL data without having to applying a CDM-multiplexed sequence through a new RB.

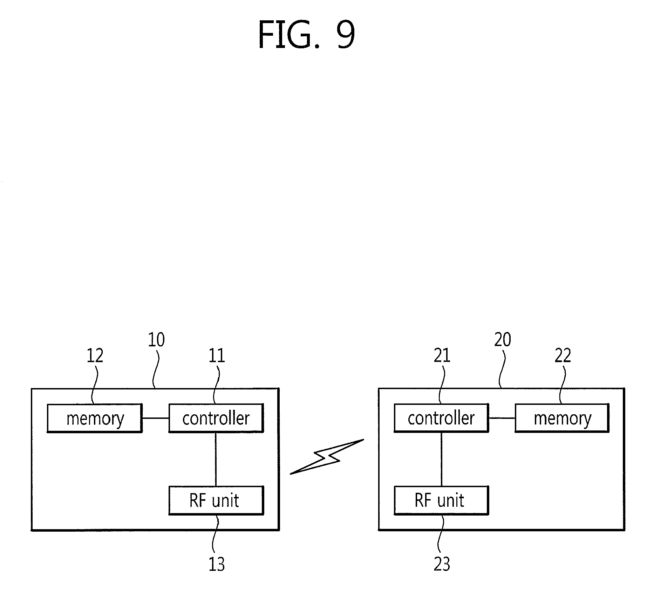

FIG. 9 is a block diagram showing internal structures of an MS and a BS in a wireless access system according to an embodiment of the present invention.

An MS 10 includes a controller 11, a memory 12, and a radio frequency (RF) unit 13.

Further, the MS also includes a display unit, a user interface unit, etc.

The controller 11 implements the proposed functions, procedures, and/or methods. Layers of a wireless interface protocol may be implemented by the controller 11.

The memory 12 is coupled to the controller 11, and stores a protocol or parameter for performing wireless communication. That is, the memory 12 stores an operating system of the MS, an application, and a general file.

The RF unit 13 is coupled to the controller 11, and transmits and/or receives an RF signal.

In addition, the display unit displays a variety of information of the MS, and may be a well-known element such as liquid crystal display (LCD), organic light emitting diodes (OLED), etc. The user interface unit may be constructed by combining well-known user interfaces such as a keypad, a touch screen, etc.

A BS 20 includes a controller 21, a memory 22, and an RF unit 23.

The controller 21 implements the proposed functions, procedures, and/or methods. Layers of a wireless interface protocol may be implemented by the controller 21.

The memory 22 is coupled to the controller 21, and stores a protocol or parameter for performing wireless communication.

The RF unit 23 is coupled to the controller 21, and transmits and/or receives an RF signal.

The controllers 11 and 21 may include an application-specific integrated circuit (ASIC), a separate chipset, a logic circuit, and/or a data processing unit. The memories 12 and 22 may include a read-only memory (ROM), a random access memory (RAM), a flash memory, a memory card, a storage medium, and/or other equivalent storage devices. The RF units 13 and 23 may include a baseband circuit for processing an RF signal. When the embodiment of the present invention is implemented in software, the aforementioned methods can be implemented with a module (i.e., process, function, etc.) for performing the aforementioned functions. The module may be stored in the memories 12 and 22 and may be performed by the controllers 11 and 21.

The memories 12 and 22 may be located inside or outside the controllers 11 and 21, and may be coupled to the controllers 11 and 21 by using various well-known means.

In addition, the terminology used herein is for the purpose of describing particular embodiments only and is not intended to be limiting of the invention. Unless otherwise defined, all terms used herein have the same meaning as commonly understood by one of ordinary skill in the art to which this invention pertains, and should not be interpreted as having an excessively comprehensive meaning nor as having an excessively contracted meaning. If technical terms used herein is erroneous that fails to accurately express the technical idea of the present invention, it should be replaced with technical terms that allow the person in the art to properly understand. The general terms used herein should be interpreted according to the definitions in the dictionary or in the context and should not be interpreted as an excessively contracted meaning.

As used herein, the singular forms are intended to include the plural forms as well, unless the context clearly indicates otherwise. In the present application, it is to be understood that the terms such as "including" or "having," etc., are intended to indicate the existence of the features, numbers, operations, actions, components, parts, or combinations thereof disclosed in the specification, and are not intended to preclude the possibility that one or more other features, numbers, operations, actions, components, parts, or combinations thereof may exist or may be added.

It will be understood that although the terms "first" and "second" are used herein to describe various elements, these elements should not be limited by these terms. These terms are only used to distinguish one element from another element. For example, a first component may be termed a second component, and similarly, a second component may be termed a first component without departing from the scope of the present invention.

When a component is mentioned as being "connected" to or "accessing" another component, this may mean that it is directly connected to or accessing the other component, but it is to be understood that there are no intervening components present. On the other hand, when a component is mentioned as being "directly connected" to or "directly accessing" another component, it is to be understood that there are no intervening components present.

The following embodiments correspond to combinations of elements and features of the present invention in prescribed forms. And, it is able to consider that the respective elements or features are selective unless they are explicitly mentioned. Each of the elements or features can be implemented in a form failing to be combined with other elements or features. Moreover, it is able to implement an embodiment of the present invention by combining elements and/or features together in part. A sequence of operations explained for each embodiment of the present invention can be modified. Some configurations or features of one embodiment can be included in another embodiment or can be substituted for corresponding configurations or features of another embodiment. It is apparently understandable that claims failing to be explicitly cited in the appended claims are combined to construct new embodiments or can be included as new claims by amendment after filing the application.

**Claims**

1. A method for transmitting uplink (UL) data by a user equipment (UE) in a wireless access system, the method comprising:

receiving UL resource allocation information for UL data transmission from a base station through a downlink (DL) control channel, wherein the UL resource allocation information includes resource block allocation information regarding a resource block allocated to each slot constituting a subframe and modulation and coding scheme (MCS) information;
receiving, from the base station, sequence information regarding a sequence allocated for each UE so as to transmit UL data in a code division multiplexing (CDM) manner in cooperation with another UE in a resource block pair region of the subframe; and
transmitting UL data to the base station by using the resource block pair region on the basis of the received sequence information.

2. The method of claim 1, wherein the sequence information includes at least one of a seed sequence value allocated to generate a sequence for each UE, a cyclic shift value, and hopping pattern information for the cyclic shift.

3. The method of claim 1, wherein the resource block pair region is hopped in a frequency domain.

4. The method of claim 1, wherein in the transmitting of the UL data, a symbol modulated with the MCS information is mapped to a sequence generated by using the sequence information and is transmitted to the base station by using the resource block pair region.

5. The method of claim 1, wherein the sequence information is transmitted through the DL control channel or through higher layer signaling.

6. The method of claim 1, wherein the UL resource allocation information is transmitted UE-specifically, group-specifically, or semi-specifically.

7. The method of claim 6, wherein if the UL resource allocation information is transmitted group-specifically, the UL resource allocation information further includes a group identifier (ID).

8. The method of claim 1, further comprising receiving, from the base station, acknowledgement (ACK) or negative acknowledgement (NACK) for the UL data transmission.

9. The method of claim 8, wherein the ACK or the NACK is transmitted through a physical hybrid-ARQ indicator channel (PHICH).

10. The method of claim 10, wherein the PHICH resource mapping is defined by the equation:

$$n_{PHICH}^{group} = (I_{PRB\_RA}^{lowest\_index} + n_{offset} + n_{DMRS}) \bmod N_{PHICH}^{group} + I_{PHICH} N_{PHICH}^{group}$$

$$n_{PHICH}^{seq} = (\lfloor (I_{PRB\_RA}^{lowest\_index} + n_{offset}) / N_{PHICH}^{group} \rfloor + n_{DMRS}) \bmod 2 N_{SF}^{PHICH}$$

,

where $n_{offset}$ is an offset value for modifying the PHICH resource mapping in a long term evolution (LTE)/LTE-advanced (LTE-A) system.

11. The method of claim 1, wherein in the transmitting of the UL data, the UL data is repetitively transmitted to the base station by using the resource block pair region during a specific subframe.

12. The method of claim 8, further comprising, if the NACK is received from the base station, retransmitting the UL data by using the resource block pair region.

13. The method of claim 12, further comprising receiving a UL grant from the base station to retransmit the UL data.

14. The method of claim 1, wherein the UE is a machine type communication (MTC) UE or a machine-to-machine (M2M) UE supporting M2M communication.

15. A user equipment (UE) for transmitting uplink (UL) data in a wireless access system, the UE comprising:

   a radio frequency (RF) unit for transmitting and receiving a radio signal with respect to an external element; and
   a controller coupled to the RF unit, wherein the controller is configured for controlling the RF unit for:

      receiving UL resource allocation information for UL data transmission from a base station through a downlink (DL) control channel, wherein the UL resource allocation information includes resource block allocation information regarding a resource block allocated to each slot constituting a subframe and modulation and coding scheme (MCS) information;
      receiving, from the base station, sequence information regarding a sequence allocated for each UE so as to transmit UL data in a code division multiplexing (CDM) manner in cooperation with another UE in a resource block pair region of the subframe; and
      transmitting UL data to the base station by using the resource block pair region on the basis of the received sequence information.

16. The UE of claim 15, wherein the sequence information includes at least one of a seed sequence value allocated to generate a sequence for each UE, a cyclic shift value, and hopping pattern information for the cyclic shift.

17. The UE of claim 15, wherein the controller is configured for controlling the RF unit such that a symbol modulated with the MCS information is mapped to a sequence generated by using the sequence information and is transmitted to the base station by using the resource block pair region.

18. The UE of claim 15, wherein the sequence information is transmitted through the downlink control channel or through higher layer signaling.

19. The UE of claim 15, wherein the UL resource allocation information is transmitted UE-specifically, group-specifically, or semi-specifically.

20. The UE of claim 19, wherein if the UL resource allocation information is transmitted group-specifically, the UL resource allocation information further includes a group identifier (ID).

21. The UE of claim 15, wherein the controller is configured for controlling the RF unit such that acknowledgement (ACK) or negative acknowledgement (NACK) for the UL data transmission is received from the base station.

22. The UE of claim 21, wherein the ACK or the NACK is transmitted through a physical hybrid-ARQ indicator channel (PHICH).

23. The UE of claim 15, wherein the controller is configured for controlling the RF unit such that the UL data is repetitively transmitted to the base station by using the resource block pair region during a specific subframe.

24. The UE of claim 21, wherein the controller is configured for controlling the RF unit such that, if the NACK is received from the base station, the UL data is retransmitted by using the resource block pair region.

25. The UE of claim 24, wherein the controller is configured for controlling the RF unit such that a UL grant is received from the base station to retransmit the UL data.

# FIG. 1

# FIG. 2

1 radio frame, $T_f=307200T_s=10ms$

1 SLOT, $T_{slot}=15360T_s=0.5ms$

| #0 | #1 | #2 | #3 | ... | #18 | #19 |
|----|----|----|----|-----|-----|-----|

1 subframe

# FIG. 3

(a)

control region     data region

frequency

time

1st slot      2nd slot

subframe

(b)

control region

data region

RB PAIR

ONE slot     ONE slot

frequency

time

subframe

# FIG. 4

ONE DL slot $T_{slot}$

$N_{symb}^{DL}$ OFDM symbols

$k = N_{RB}^{DL} N_{sc}^{RB} - 1$

resource block
$N_{symb}^{DL} \times N_{sc}^{RB}$
resource elements

resource elements $(k, \ell)$

$k = N_{RB}^{DL} \times N_{sc}^{RB}$ SUBCARRIERS

$N_{sc}^{RB}$ SUBCARRIERS

$k = 0$

$1 = 0$

$1 = N_{symb}^{DL} - 1$

# FIG. 5

(a)

normal CP

(b)

extended CP

# FIG. 6

```
  ┌──────────┐                                              ┌──────────┐
  │ MTC UE   │                                              │          │
  │  (M2M)   │                                              │    BS    │
  └──────────┘                                              └──────────┘
       │                                                         │
       │  UL resource allocation through DL control channel      │
       │◄────────────────────────────────────────────────────── │ ⟍  S610
       │     (resource block allocation information,             │
       │               MCS information)                          │
       │                                                         │
       │     sequence information for CDM with another UE        │
       │◄────────────────────────────────────────────────────── │ ⟍  S620
       │                                                         │
  ┌──────────┐                                                   │
  │ sequence │ ──── S630                                         │
  │generation│                                                   │
  └──────────┘                                                   │
       │                                                         │
       │            UL data transmission                         │
       │ ──────────────────────────────────────────────────────►│ ⟍  S640
       │                                                         │
       │                                                         │
```

# FIG. 7

MTC UE (M2M) ← UL resource allocation through DL control channel (resource block allocation information, MCS information) — BS — S710

sequence information for CDM with another UE — S720

sequence generation — S730

UL data transmission — S740

HARQ ACK or NACK — S750

# FIG. 8

```
┌──────────────┐                              ┌──────────────┐
│   MTC UE     │                              │      BS      │
│   (M2M)      │                              │              │
└──────┬───────┘                              └──────┬───────┘
       │                                             │
       │  UL resource allocation through DL control channel
       │◄────────────────────────────────────────────┤  ~S810
       │   (resource block allocation information,    │
       │            MCS information)                  │
       │                                             │
       │   sequence information for CDM with another UE
       │◄────────────────────────────────────────────┤  ~S820
       │                                             │
┌──────┴───────┐                                     │
│   sequence   │  ~S830                              │
│  generation  │                                     │
└──────┬───────┘                                     │
       │           UL data transmission              │
       ├────────────────────────────────────────────►  ~S840
       │                                             │
       │                                             │
       │           HARQ ACK or NACK                  │
       │◄────────────────────────────────────────────┤  ~S850
       │                                             │
       │                                             │
       │          UL data retransmission             │
       ├────────────────────────────────────────────►  ~S860
       │                                             │
```

# FIG. 9